# EUROPÄISCHE PATENTSCHRIFT

(11) **EP 2 539 513 B1**
(45) Veröffentlichungstag und Bekanntmachung des Hinweises auf die Patenterteilung: **20.04.2016**
(21) Anmeldenummer: 11708698.3
(22) Anmeldetag: 18.02.2011
(51) Int. Cl.: E01F 13/02, A01K 3/00

(54) **TRANSPORTABLE BEGRENZUNGSVORRICHTUNG SOWIE PFOSTEN AUS FLEXIBLEM MATERIAL**
PORTABLE BARRIER DEVICE AND FLEXIBLE MATERIAL POST
DISPOSITIF DE LIMITATION TRANSPORTABLE ET POTEAU DE MATÉRIAU FLEXIBLE

(30) Priorität: 22.02.2010 DE 102010008856
(43) Veröffentlichungstag der Anmeldung: 02.01.2013
(73) Patentinhaber: Kümmerle, Günther, 72555 Neuhausen (DE)
(72) Erfinder: Kümmerle, Günther, 72555 Neuhausen (DE)
(86) Internationale Anmeldenummer: PCT/EP2011/000784
(87) Internationale Veröffentlichungsnummer: WO 2011/101157

(56) Entgegenhaltungen:
- WO-A2-2007/005061
- DE-A1- 2 646 747
- JP-U- 3 134 021
- US-A- 2 600 666

## Beschreibung

Die Erfindung betrifft eine transportable Begrenzungsvorrichtung mit mehreren voneinander beabstandet angeordneten Pfosten, die jeweils zumindest abschnittsweise aus einem flexiblen Material bestehen, sowie einteilige oder mehrteilige Pfosten die zumindest abschnittsweise aus einem flexiblen Material bestehen.

Transportable Begrenzungsvorrichtungen kommen für verschiedenste Zwecke zum Einsatz. Bekannt sind transportable Barrieren, die vorzugsweise zur Abgrenzung von Baustellen oder Zuschauerbereichen bei Straßenveranstaltungen eingesetzt werden. Diese Barrieren bestehen meist aus einzelnen rechteckigen Metall- oder Kunststoffgittern, die untenseitig stabförmige Verlängerungen aufweisen. Zur Fixierung der Gitter werden die genannten Verlängerungen in ein oder mehrere Ballastelemente mit entsprechenden Öffnungen eingesteckt.

Transportable Begrenzungsvorrichtungen kommen auch als Weidezäune zum Einsatz. Für den Aufbau von Weidezäunen ist neben der Verwendung von Holzpfosten der Einsatz von Pfosten aus Metall oder Kunststoff bekannt. Zwischen den in vertikaler Richtung verlaufenden Pfosten werden in horizontaler Richtung, voneinander beabstandet, Drähte (Querdrähte) gespannt. Neben starren Pfosten gibt es auch Pfosten aus flexiblem Material.

Pfosten aus flexiblem Material werden insbesondere für die Befestigung von Elektrozäunen eingesetzt. Dokument DE 26 46 747 offenbart Zaunpfähle, die aus spritzgegossenen thermoplastischen Kunstharzteilen bestehen und einen vorderen Flansch, einen hinteren Flansch, einen Steg und im unteren Abschnitt eine Ankerplatte aufweisen. Wird dieser in den Erdboden eingesetzt Pfahl umbogen, so richtet er sich wieder in die ursprüngliche Lage auf. Auch Zaunpfosten aus Fiberglas sind bekannt und werden aufgrund ihrer Biegsamkeit mit dem gleichen Zweck eingesetzt.

In Dokument AT 240 584 B ist ein Pfosten offenbart, der aus einem Rohr aus Polyesterchlorid besteht, wobei die Wandstärke des Rohrs über seine gesamte Länge so groß ist, dass der Pfahl bei noch bestehender Nachgiebigkeit eine optimale Steifheit aufweist. Am oberen Ende weist der Pfahl eine Öse zur Aufnahme eines Elektrodrahtes auf.

Dokument DE 1 977 994 U offenbart einen Elektrozaunpfosten aus federndem Material, insbesondere Federstahl. Die am oberen Ende des Pfostens vorgesehene Öse dient zur Aufnahme eines Elektrodrahtes.

Dokument GB 809,663 offenbart einen Elektrozaunpfosten aus Metall. Die am oberen Ende des Pfostens vorgesehene Öse ist elektrisch isoliert und dient der Aufnahme eines Elektrodrahtes.

Dokument GB 458,563 betrifft allgemein die Verankerung von Begrenzungsvorrichtungen und offenbart Pfosten, bestehend aus einem oberen und einem unteren Teil, wobei der untere Teil fest im Untergrund verankert wird und der obere Teil lösbar mit dem unteren Teil verbunden ist.

Keiner der vorgenannten Pfosten ist geeignet zum Aufbau einer Begrenzungsvorrichtung, in welcher die Pfosten jeweils zumindest abschnittsweise bogenförmig in die Richtung des jeweils benachbarten Pfostens verlaufen und mit dem bogenförmigen Abschnitt auch zur horizontalen Ausdehnung der Begrenzungsvorrichtung beitragen.

Aus den Dokumenten US 1,142,233, DE 192 733 A sowie US 6,386,517 B1 sind transportable Begrenzungsvorrichtungen bekannt, die zur Einfassung von Blumenbeeten in Gärten zum Einsatz kommen, und aus einer Vielzahl von U-förmigen Pfosten aufgebaut sind und mit beiden Endabschnitten gleichzeitig in das Erdreich eingelassen werden. Die U-förmigen Pfosten sind vorgeformt, d.h. sie werden bereits bei ihrer Fertigung in diese Form gebracht. Dabei geht von den bogenförmigen Abschnitten keine mit flexiblen Materialeigenschaften in Zusammenhang stehende Spannung aus, die stabilisierend auf den benachbarten Pfosten wirkt.

Bei Elektrozäunen ist es wichtig, dass der stromführende Draht dauerhaft in seiner ursprünglich gespannten Form verbleibt. Ein Durchhängen des Drahtes führt leicht zum Kontakt zwischen dem Draht und dem darunter liegenden Gras, so dass das nasse oder noch nicht welk gewordene Gras den Strom ins Erdreich leitet und dadurch am nachfolgenden Zaunabschnitt nachteiliger Weise keine ausreichende Spannung mehr anliegt.

Um das Durchhängen der Querdrähte zu vermeiden, werden diese mit großer Vorspannung installiert. Nachteiliger Weise kommt es jedoch bei mehrjährigem Betrieb dieser Zäune trotz Vorspannung, bzw. gerade wegen der Vorspannung, schnell zu einem Erschlaffen der Drähte und dadurch zu einem vorschreitenden Verfall des Zauns insgesamt. Bei Installation dieser Zäune geht von den gespannten Drähten eine Zugspannung aus, die auch auf die Verankerung der einzelnen Pfosten im Erdreich wirkt, und diese schwächt. Eine gegenseitige Stabilisierung der den Zaun aufbauenden Elemente, d.h. der Pfosten untereinander, ist bei den bekannten Zauntypen nicht gewährleistet.

Vor diesem Hintergrund besteht die Aufgabe der Erfindung in der Bereitstellung einer transportablen und schnell installierbaren Begrenzungsvorrichtung mit selbststabilisierenden Eigenschaften.

Eine weitere Aufgabe besteht in der Bereitstellung einer Begrenzungsvorrichtung, die außerdem bei Gefahren und in Paniksituationen sicher ist, d.h. im Panikfall bei einem vorbestimmbaren Gegendruck den Fluchtweg für Mensch und Tier freigibt.

Die Aufgabe wird gelöst durch eine transportable Begrenzungsvorrichtung mit mehreren voneinander beabstandet angeordneten Pfosten, die jeweils zumindest abschnittsweise aus einem flexiblen Material bestehen, wobei
- der aus dem flexiblen Material bestehende Pfostenabschnitt (1a, 1 b, 1 c) bei allen Pfosten (1) oder zumindest bei einem Teil der Pfosten (1) so angeordnet ist, dass
   - dieser Abschnitt bogenförmig in die Richtung eines benachbarten Pfostens (1) verläuft, und
   - dieser Abschnitt aufgrund der flexiblen Materialeigenschaften unter Spannung steht, wobei
- der obere Pfostenabschnitt (1a), welcher auf den bogenförmig verlaufenden Abschnitt des Pfostens (1) folgt, jeweils lösbar mit dem benachbarten Pfosten (1) verbunden ist.

Zur Lösung der Aufgabe können die jeweils aus einem oder aus mehreren Abschnitten (z.B. oberer, mittlerer oder unterer Abschnitt) bestehenden Pfosten entweder einteilig sein (Einzelpfosten) oder mehrteilig sein, d.h. jeweils aus mehreren bündelartig angeordneten Einzelpfosten (mehrteiliger Pfosten) bestehen.

Die selbststabilisierenden Eigenschaften der Begrenzungsvorrichtung beruhen zum einen auf den flexiblen Materialeigenschaften der Pfosten, die jeweils zumindest abschnittsweise aus einem flexiblen Material bestehen. Zum anderen beruhen die selbststabilisierenden Eigenschaften in der bogenförmigen Anordnung der Pfosten unter Spannung bei Ausnutzung der flexiblen Materialeigenschaften.

Der Begriff "Flexibilität" bezeichnet im allgemeinen Sprachgebrauch die Eigenschaft biegsamer (flexibler) Materialien. Eine im Hinblick auf die Elastizität eines Materials definierbare Materialkonstante ist z. B. das Elastizitätsmodul. Die Elastizität ist die Eigenschaft eines Körpers oder Werkstoffes, unter Krafteinwirkung seine Form zu verändern und bei Wegfall der einwirkenden Kraft in die Ursprungsform zurückzukehren, so wie dies zum Beispiel bei einer Sprungfeder der Fall ist. Die in Bezug auf die Materialeigenschaften der Pfosten verwendeten Begriffe "flexibel" und "elastisch" sind im Zusammenhang mit der vorliegenden Erfindung als Synonyme anzusehen.

Der selbststabilisierende Effekt verstärkt sich zusätzlich, wenn die beiden endseitigen Pfosten einer Reihe von erfindungsgemäß miteinander verbunden Pfosten unter Anlegen einer Zugspannung, die aufgrund der jeweils zwischen den einzelnen Pfosten bestehenden Verbindung auf die gesamte Begrenzungsvorrichtung wirkt, fixiert werden.

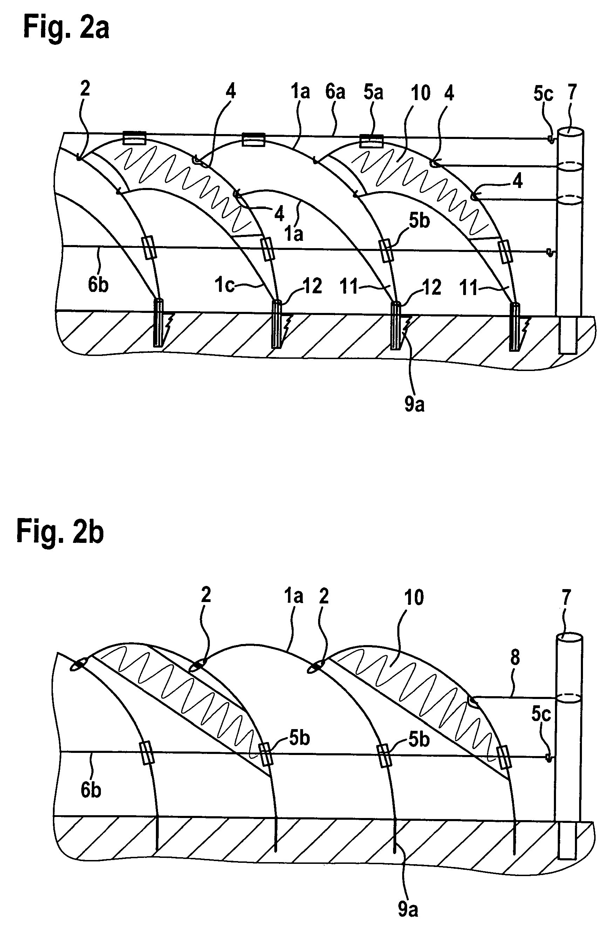

Bei Biegung des aus einem flexiblen Material bestehenden Pfostenabschnitts weicht der bodenseitige Abschnitt dieses Pfostens in die der Biegungsrichtung entgegen gesetzte Richtung aus. Falls der bodenseitige Abschnitt einen Erdanker gem. Fig. 2a aufweist, führt diese Ausweichbewegung zum Eindringen des Ankers (siehe Bezugszeichen 9a) in den seitlich gelegenen Erdboden und somit zu einer verbesserten Verankerung des Pfostens im seitlich gelegenen Erdreich (Seitenanker).

Neben dem selbststabilisierenden Effekt, welcher der Begrenzungsvorrichtung im aufgebauten Zustand innewohnt, zeichnet sich die Begrenzungsvorrichtung durch die Besonderheit aus, dass deren Pfosten sowohl zur vertikalen Ausdehnung als auch zur horizontalen Ausdehnung der Befestigungsvorrichtung beitragen.

Einige der mit der Begrenzungsvorrichtung verbundenen Vorteile und Besonderheiten sind nachfolgend zusammengefasst:
- Im montierten Zustand trägt jedes Element aufgrund seines zumindest abschnittsweise bogenförmigen Verlaufs sowohl zur vertikalen Ausdehnung der Begrenzungsvorrichtung als auch zur horizontalen Ausdehnung der Begrenzungsvorrichtung bei, so dass die üblicherweise zum Aufbau eines Zaunes erforderlichen Querelemente, z.B. in Form von quer angeordneten Planken, nicht erforderlich sind.
- Bei entsprechender Verbindung der zumindest abschnittsweise bogenförmig verlaufenden Pfosten ist die Höhe der Begrenzungsvorrichtung innerhalb eines bestimmten Bereichs durch entsprechende Zugspannung, die auf alle miteinander verbunden Pfosten einheitlich wirkt, variabel einstellbar. Die von dem flexiblen Material eines jeden Pfostens ausgehende, der Zugspannung entgegen gerichtete, Rückstellkraft bewirkt vorteilhafterweise zugleich, dass die Begrenzungsvorrichtung insgesamt stabilisiert wird.
- Die zumindest abschnittsweise bogenförmig verlaufenden Zaunpfosten können in einer bevorzugten Ausführungsform obenends ein Verbindungselement aufweisen, das zur Herstellung einer lösbaren Verbindung mit dem jeweils benachbarten Pfosten dient. In einer besonders bevorzugten Ausführungsform kann dieses Verbindungselement als Sicherheitsverbindung, bestehend aus zwei miteinander verbundenen Klemmelementen, die optional zusätzlich auf der Vorderseite Sicherheitsplatten aufweisen können, ausgeführt sein. Die Sicherheitsverbindung löst sich im Panikfall unter leichter Belastung, wobei sich die Pfosten aufgrund ihrer Elastizität nachfolgend senkrecht nach oben ausrichten, so dass der Fluchtweg für Mensch oder Tier nach einem über die Art und Beschaffenheit des Verbindungselements bestimmbaren Gegendruck freigegeben wird.
- Die Pfosten der Begrenzungsvorrichtung richten sich nach dem Lösen der Verbindung mit dem jeweiligen Nachbarpfosten von selbst senkrecht, d.h. linear, aus und können daher platzsparend transportiert und gelagert werden oder am Einsatzort verbleiben, ohne die z.B. bei einem Weidezaun regelmäßig erforderlichen Mäharbeiten unter dem Zaun zu behindern.

Nachfolgend werden bevorzugte Ausführungsformen der Begrenzungsvorrichtung sowie die sie aufbauenden Pfosten näher erläutert.

In einer bevorzugten Ausführungsform bestehen die Pfosten der transportablen Begrenzungsvorrichtung jeweils über ihre gesamte Länge aus einem flexiblen Material.

In einer weiteren bevorzugten Ausführungsform sind die Pfosten der transportablen Begrenzungsvorrichtung unterteilt in einen oberen und in einen unteren Pfostenabschnitt, wobei jeder Pfosten im oberen Pfostenabschnitt aus einem flexiblen Material besteht.

In einer weiteren bevorzugten alternativen Ausführungsform sind die Pfosten der transportablen Begrenzungsvorrichtung in drei Abschnitte unterteilt, nämlich in einen oberen und einen zwischen dem oberen Pfostenabschnitt und dem unteren Pfostenabschnitt liegenden mittleren Pfostenabschnitt, wobei der mittlere Pfostenabschnitt aus einem flexiblen Material besteht.

Die lösbare Verbindung zwischen den Pfosten kann an verschiedenen Positionen und auf verschiedene Weise hergestellt werden.

In einer bevorzugten Ausführungsform ist die lösbare Verbindung zwischen dem oberen Pfostenabschnitt eines ersten Pfostens, mit einem benachbarten zweiten Pfosten, jeweils in dem zwischen dem oberen Pfostenabschnitt und dem unteren Pfostenabschnitt liegenden mittleren Pfostenabschnitt des benachbarten Pfostens angeordnet.

Das flexible Material, aus dem die Pfosten der Begrenzungsvorrichtung zumindest abschnittsweise bestehen, ist aus einem elastischen Kunststoff oder aus einem elastischen Metall, wobei die Elastizität des Material eine Biegung um bis zu 180° zulässt.

In einer bevorzugten Ausführungsform ist das flexible Material der Pfosten aus Fiberglas (Glasfaser verstärkter Kunststoff (GFK)) oder einem anderen Faserkompositmaterial, insbesondere mehrteiligem Fiberglas oder aus einem kohlefaserverstärkten Material oder Kunststoff.

GFK-Stäbe mit einem Durchmesser von 5 bis 25mm sind besonders geeignet für Pfostenlängen von 1 m bis 5m. Ganz besonders geeignet sind GFK-Stäbe (Hersteller Fiber ConcepT, 67059 Ludwigshafen, Germany) mit einem Durchmesser von 10 Millimeter und einer Länge von 3 bis 4 Metern.

In einer alternativen bevorzugten Ausführungsform besteht das flexible Material aus zwei oder mehreren Metallstäben, vorzugsweise mit jeweils rundem Querschnitt, wobei die Metallstäbe zur Erhöhung der Stabilität des aus dem flexiblen Material bestehenden Pfosten bzw. Pfostenabschnitts in Längsrichtung, vergleichbar mit den einzelnen Strängen eines Seils, umeinander gewunden sind. Eine mehrere Metallstäbe auf diese Weise verbindende Anordnung ist auch von sog. Drahtstielen, die Bestandteile von Flaschenbürsten sind, bekannt. Optional können die umeinander gewundenen Metallstäbe abschnittsweise, z.B. im unteren Abschnitt von einem Material mit isolierenden Eigenschaften, z.B. einem thermoplastischen Kunststoff ummantelt sein. Bei einem Weidezaun hat dies den Vorteil, dass neben den Querdrähten, auch die bogenförmig in horizontale Richtung verlaufenden Pfostenabschnitte mit Strom beaufschlagt werden können, während die unteren Pfostenabschnitte gegenüber dem sie umgebenden Gras elektrisch isoliert sind.

In einer bevorzugten Ausführungsform der Begrenzungsvorrichtung ist der obere Pfostenabschnitt, welcher dem aus einem elastischen Material bestehenden bogenförmig verlaufenden Pfostenabschnitt vorausgeht, an seinem Ende hakenartig umgebogen. Die lösbare Verbindung zwischen dem oberen Pfostenabschnitt und dem benachbarten Pfosten kommt zustande, indem die umgebogenen Endbereiche des oberen Pfostenabschnitts an den Nachbarpfosten eingehakt werden, d.h. diesen umfassen. Die Haken umfassen bevorzugt den bogenförmig verlaufenden Abschnitt.

Alternativ zu dem hakenartig umgebogenen Endabschnitt des oberen Pfostenabschnitts ist vorgesehen, dass im Bereich des oberen Pfostenabschnitts ein Haken befestigt ist. Die Anordnung des Hakens ist seinem Zweck entsprechend so, dass der Haken, im nicht gebogenen Zustand des Pfostens, in die Richtung des unteren Pfostenabschnitts geöffnet ist. Zur Festlegung der Höhe (Fixierung) des zum benachbarten Pfosten gehörenden Verbindungselements im Bereich des bogenförmig verlaufenden Abschnitts weist jeder Pfosten mindestens ein Fixierelement auf.

Die hakenförmig gestalteten Verbindungselemente bestehen vorzugsweise aus einem, thermoplastischen Kunststoff.

Das Verbindungselement kann auch aus einem aufrollbaren Band oder Seil bestehen, so dass der Abstand zwischen den Pfosten vorteilhafterweise vergrößert werden kann. In einer ganz besonders bevorzugten Ausführungsform ist vorgesehen, dass das aufrollbare Band durch einen Aufrollmechanismus eingezogen wird, so dass im demontierten Zustand Platz gespart wird und der Pfosten ohne Störung des Bandes gehandhabt werden kann. Das aufrollbare Band 13 kann zum Beispiel ein Elektrozaunband, ein Seil oder ein Elektrozaunseil sein.

In einer weiteren besonders bevorzugten Ausführungsform der Begrenzungsvorrichtung weisen die Pfosten jeweils, am oberen Pfostenabschnitt (am meisten bevorzugt an dessen Ende), ein Verbindungselement auf. Das Verbindungselement besteht aus zwei voneinander beabstandeten Klemmelementen, die so miteinander verbunden sind, dass eine Seite offen bleibt, d.h. der Zugang zu dem zwischen den Klemmbacken liegenden Bereich bleibt auf dieser Seite frei. Der Abstand zwischen den Klemmelementen entspricht dem Querschnitt des benachbarten Pfostens oder ist etwas geringer bemessen als der Querschnitt des benachbarten Pfostens an der für die Anbringung des Befestigungselements vorgesehenen Stelle, so dass die Anbringung des Verbindungselementes am benachbarten Pfosten im zweiten Fall unter leichtem Anpressdruck erfolgt. Dies verhindert ein Herausgleiten des Pfostens während des Aufbaus der Begrenzungsvorrichtung und erleichtert diesen somit.

Abhängig von der Verwendung der Begrenzungsvorrichtung liegt es im Rahmen der Erfindung, dass nach dem Aufbau der Begrenzungsvorrichtung, d.h. nach dem die aus flexiblem Material bestehenden Pfosten, bei bogenförmigem Verlauf der flexiblen Pfostenabschnitte miteinander verbunden sind, noch zusätzlich Querdrähte angebracht werden. Zur Befestigung dieser Querdrähte sind an den verschiedenen Pfostenabschnitten Befestigungselemente angeordnet. Die Befestigungselemente sind als Isolatoren ausgebildet, falls an den Querdrähten, z.B. bei Verwendung der Begrenzungsvorrichtung als Weidezaun, eine elektrische Spannung angelegt werden soll.

Zur flächigen Ausgestaltung der zwischen den Pfosten liegenden Bereiche ist bei einer besonders bevorzugten Ausführungsform der Begrenzungsvorrichtung vorgesehen, dass zumindest bei einem Teil der Pfosten in dem aus einem flexiblen Material bestehenden Pfostenabschnitt und gebogen angeordneten Pfostenabschnitt ein flächiges Gebilde als flexible Bespannung aus einem flexiblen Material angeordnet ist. Das flächige Gebilde macht die Begrenzungsvorrichtung optisch leichter erkennbar. Dies unterstützt, dass Tiere die durch die Vorrichtung geschaffene Begrenzung im schnellen Lauf rechtzeitig erkennen.

Das flächige Gebilde ist an mindestens zwei sich gegenüberliegenden Enden jeweils mit einem Abschnitt des gebogenen Pfostens verbunden, wobei mindestens eine der Verbindungen zwischen dem flexiblen Material und dem Bogenabschnitt lösbar ist.

Die Pfosten weisen in dem aus einem flexiblen Material bestehenden Pfostenabschnitt einen Bogen von kreisrunder bis ellipsoider Form auf, dessen Winkel im dem Bereich von 70° bis 180° liegt, wobei
- die von dem Bogen umschriebene Fläche zumindest zum Teil durch ein flächiges Gebilde aus flexiblem Material belegt ist, und
- das flächige Gebilde aus einem flexiblen Material mit dem den Bogen beschreibenden Pfostenabschnitt über dessen gesamte Länge oder mindestens mit zwei sich gegenüberliegenden Bogenabschnitten fest oder lösbar verbunden ist.

Die Verbindung zwischen dem flächigen aus einem flexiblen Material bestehenden Gebilde und dem gebogenen Pfostenabschnitt über dessen gesamte Länge, bzw. zwischen dem flächigen Gebilde und den beiden sich gegenüber liegenden Pfostenabschnitten, sorgt dafür, dass der Pfosten in einem gebogenen Zustand fixiert wird. Die Art der Verbindung zwischen dem flexiblen Material und dem Bogen oder dessen Abschnitten kann fest oder lösbar ausgebildet sein. So kann die Verbindung z.B. dadurch hergestellt werden, dass das flexible Material entlang seiner gesamten Längsseite oder an zwei sich gegenüberliegenden Endabschnitten umgeschlagen und mit sich selbst, z. B. durch Nähen, Kleben oder einen Klettverschluss, verbunden wird, so dass ein Hohlraum entsteht, in den der Pfosten eingeführt werden kann.

Das aus einem flexiblen Material bestehende flächige Gebilde (flexible Bespannung) kann aus einem gewobenen oder einem nicht gewobenen Material bestehen. Denkbar sind Polyesterstoffe, Netze aus Kunststoff, Baumwoll-, Vlies- oder Filzstoffe.

Zu Werbezwecken sollten die das flächige Gebilde bildenden Materialien bedruckbar sein.

Ein weiterer Aspekt der Erfindung betrifft einen einteiligen Pfosten aus einem elastischen Material, wobei der Pfosten an seinem oberen Ende ein Verbindungselement aufweist.

Die Pfosten können verschiedene Querschnitte aufweisen. Bevorzugt ist aus Stabilitätsgründen ein kreisrunder oder polygonaler, mindestens 5-eckiger, Querschnitt. Der jeweilige Einzelpfosten kann sich zur Pfostenspitze hin verjüngen, d.h. sein Durchmesser nimmt nach oben hin ab.

Es liegt auch im Rahmen der Erfindung, dass die Pfosten jeweils aus mehreren teleskopartig ineinander geführten Teilabschnitten bestehen, wobei mindestens einer der oberen Teilabschnitte aus einem flexiblen Material ist.

Ein weiterer Aspekt der Erfindung betrifft einen mehrteiligen Pfosten, der zum Aufbau einer erfindungsgemäßen Begrenzungsvorrichtung dient.

Mehrteilig bedeutet, dass der Pfosten jeweils zwei oder mehrere Einzelpfosten umfasst und die Einzelpfosten
- jeweils eine unterschiedliche Höhe aufweisen, und
   die Einzelpfosten in dem mehrteiligen Pfosten
- untenends bündig miteinander abschließen, und
- bei bündelartiger Anordnung fest miteinander verbunden sind.

Dabei weisen die zu einem mehrteiligen Pfosten gehörenden Einzelpfosten jeweils die gleichen abgestuften Längen auf. Wenn mit einer Vielzahl von mehrteiligen Pfosten dieses Typs eine Begrenzungsvorrichtung aufgebaut wird, so sind die von den flexiblen Pfostenabschnitten gebildeten Bögen, die jeweils zwischen zwei mehrteiligen Pfosten aufgespannt sind, jeweils von einer sich wiederholenden gleichen, bzw. annähernd gleichen, Bogengröße (siehe Fig. 2a).

Die Verbindung der als Bündel angeordneten Einzelpfosten im unteren Endabschnitt kann durch eine Hülse aus Metall oder aus Kunststoff, insbesondere einem thermoplastischen Kunststoff, z.B. aus einem unter Wärmeeinwirkung schrumpfenden Kunststoff, hergestellt werden, wobei die Hülse jeweils die den mehrteiligen Pfosten bildenden Einzelpfosten umschließt und so zugleich miteinander verbindet. Der so gestaltete Endabschnitt des mehrteiligen Pfostens dient zur Verankerung des mehrteiligen Pfostens im Erdboden oder in einem Ballastelement, welches eine entsprechende Öffnung aufweist.

Um eine verbesserte Verankerung des mehrteiligen Pfostens im Erdreich zu erreichen, kann die Hülse auch eine zumindest teilweise unebene Oberfläche aufweisen. Die Unebenheiten können die aus mehreren oder aus einem einzelnen Querelement bestehen, wobei die Querelemente senkrecht zur Längsrichtung des Pfostens verlaufen und für eine verbesserte Verankerung des Pfostens in seitliche Richtung sorgen. Die Verbesserung der Verankerung kommt dadurch zustande, dass die als Seitenanker wirkenden Querelemente der Verankerung unter dem seitlichen Anpressdruck, der durch die Biegung des elastischen Pfostens verursacht wird, seitlich ins Erdreich eingedrückt werden oder in entsprechend dafür vorgesehene seitliche Öffnungen eines Ballastelementes gepresst werden.

Ein derartig vorteilhaft gestalteter Endabschnitt ist nicht nur für mehrteilige Pfosten sondern auch bei Einzelpfosten denkbar. So versteht es sich von selbst, dass auch ein nicht mehrteiliger Pfosten am unteren Ende eine Hülse aus Metall oder Kunststoff aufweisen kann, und der so gestaltete Endabschnitt des Einzelpfostens zur Verankerung des Einzelpfostens im Erdboden oder in einem Ballastelement dient.

In der am meisten bevorzugten Ausführungsform des mehrteiligen Pfostens sind jeweils zwei zu einem mehrteiligen Pfosten gehörende Einzelpfosten mit unterschiedlicher Länge entlang ihrer Längsrichtung zunächst abschnittsweise durch ein aus einem flexiblen Material bestehendes flächiges Gebilde, das aus einem gewobenen oder nicht gewobenen Material besteht, miteinander verbunden.

In einer weiteren Ausgestaltung dieser Ausführungsform nimmt die Breite des flexiblen Gebildes nach oben hin, d.h. in Richtung der oberen Enden der Einzelpfosten, kontinuierlich zu. Dies hat zur Folge, dass die Breite/Höhe des flächigen Gebildes, das im aufgebauten Zustand der Begrenzungsvorrichtung zwischen zwei übereinander angeordneten Bögen aufgespannt wird, auch die Bogengröße der beiden Bögen bestimmt. Dabei ist zu betonen, dass die von den Einzelpfosten beschriebenen Bögen eine kreisrunde bis ellipsoide Form aufweisen können. Die Bogenform ist in erster Linie vom Abstand der mehrteiligen Pfosten zueinander abhängig. Der durch den elastischen Pfosten oder Pfostenabschnitt gebildete Bogen verliert mit zunehmendem Abstand der Pfosten seine kreisrunde Form und bekommt eine flachere, eher ellipsoide Bogenform.

Das aus einem flexiblen Material bestehende flächige Gebilde, das im Zusammenhang mit mehrteiligen Pfosten verwendet wird, kann aus einem gewobenen oder einem nicht gewobenen Material bestehen. Denkbar sind Polyesterstoffe, Netze aus Kunststoff, Baumwoll-, Vlies- oder Filzstoffe. Zu Werbezwecken sollten die Materialien bedruckbar sein.

Die Verbindung zwischen dem flächigen Gebilde und den Einzelpfosten kann hergestellt werden, indem das flexible Material an seinen beiden Längskanten umgeschlagen und mit sich selbst durch Nähen, Kleben oder durch einen Klettverschluss verbunden wird. Der durch das Umschlagen des flexiblen Materials entstandene Hohlraum erlaubt die Einführung der Einzelpfosten.

Ein weiterer Aspekt betrifft eine Begrenzungsvorrichtung, die aus mehrteiligen Pfosten aufgebaut ist. Die Anordnung der mehrteiligen Pfosten in dieser Begrenzungsvorrichtung ist derart, dass
- die Einzelpfosten in der aufgebauten Begrenzungsvorrichtung so angeordnet sind, dass sie jeweils im Bereich ihres flexiblen Abschnitts bogenförmig in Richtung des Nachbarpfostens verlaufen, mit welchem sie fest oder lösbar verbunden sind, und
- die Einzelpfosten entsprechend ihrer unterschiedlichen Länge übereinander liegende Bögen von jeweils unterschiedlicher Größe beschreiben.

Während die Größe der Bögen zwischen zwei mehrteiligen Pfosten unterschiedlich ist, bleiben die Bogengrößen in den nachfolgenden zwischen den mehrteiligen Pfosten liegenden Abschnitten derselben Begrenzungsvorrichtung im Wesentlichen, d.h. mit Ausnahme kleinerer Schwankungen, einheitlich.

Die nachfolgend beschriebenen Verwendungen nutzen die Besonderheiten und besonderen Vorteile der oben beschriebenen Begrenzungsvorrichtungen und Pfosten.

Bevorzugt ist die Verwendung einer Vielzahl von Einzelpfosten zum Aufbau einer Begrenzungsvorrichtung, insbesondere zum Aufbau eines Weidezauns. Ebenfalls bevorzugt ist die Verwendung einer Vielzahl von Einzelpfosten zum Aufbau einer Vorrichtung zu Werbezwecken oder zum Aufbau einer Barriere, die zum Einsatz kommt bei Veranstaltungen, insbesondere bei Sportveranstaltungen, die im Freien oder in einer überdachten Konstruktionen, insbesondere in Gebäuden, stattfinden.

Weiterhin bevorzugt ist die Verwendung einer Vielzahl von mehrteiligen Pfosten zum Aufbau einer Begrenzungsvorrichtung, insbesondere zum Aufbau eines Weidezauns oder die Verwendung eines einzelnen mehrteiligen Pfostens zum Aufbau eines Weidetors.

Ebenfalls bevorzugt ist die Verwendung einer Vielzahl von mehrteiligen Pfosten zum Aufbau einer Vorrichtung zu Werbezwecken oder zum Aufbau einer Barriere, die zum Einsatz kommt bei Veranstaltungen, insbesondere bei Sportveranstaltungen, die im Freien oder in einer überdachten Konstruktionen, insbesondere in Gebäuden, stattfinden.

Beim Einsatz der Begrenzungsvorrichtung innerhalb von Gebäuden bei Anwesenheit einer größeren Menschenmenge kommt der Sicherheitsaspekt der Vorrichtung vorteilhafterweise zur Geltung. Der Sicherheitsaspekt besteht darin, dass die Verbindungselemente für den Fall, dass eine Paniksituation auftritt, Sollbruchstellen aufweisen. Brechen diese, so wird die Verbindung zum benachbarten Pfosten leicht gelöst und der sich von selbst aufrichtende Pfosten gibt den Fluchtweg ohne weiteres Zutun frei. Natürlich kommt der Vorteil auch bei Veranstaltungen mit größeren Menschenmengen im Freien, wie zum Beispiel bei Sportveranstaltungen, zur Geltung.

Denkbar ist auch eine Verwendung der Begrenzungsvorrichtung zur Abtrennung von unterschiedlichen Fahrbahnen während der Renovierung von Autobahnabschnitten oder Straßenabschnitten. Von Vorteil bei dieser Verwendungsform ist, dass durch die Variation der Zugspannung die Höhe der Begrenzungsvorrichtung variiert werden kann. Bei dieser Verwendungsform der Begrenzungsvorrichtung ist auch vorgesehen, dass an den gebogenen Pfosten, bevorzugt im oberen Bereich, Lichtreflektoren angeordnet sind. Die das Scheinwerferlicht der Fahrzeuge reflektierenden Reflektoren sind in einer Vielzahl von Farben und Reflektionsstärken verfügbar.

### BEISPIELE

Es zeigen:

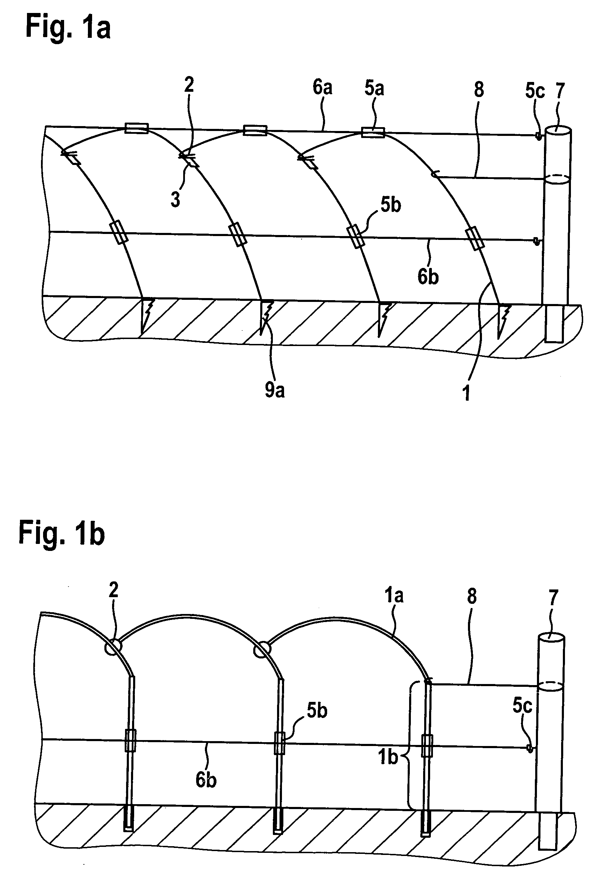

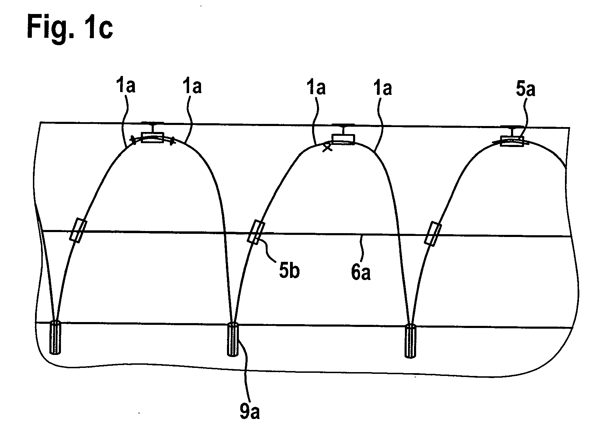

Fig. 1 a Zaun mit Pfosten aus flexiblem Material
Fig. 1 b Zaun mit Pfosten, die abschnittsweise aus flexiblem Material bestehen
Fig. 1c Zaun mit Pfosten aus flexiblem Material in alternierender Biegung
Fig. 2a Zaun mit jeweils zweiteiligen Pfosten aus flexiblem Material und Stabilisator aus einem flächigen Gebilde aus Polyester
Fig. 2b Zaun mit jeweils einteiligen Pfosten aus flexiblem Material und Stabilisatoren aus einem flächigen Polyestergebilde.
Fig. 3a Funktionsweise der Verbindungselemente und der Klemmelemente
Fig. 3b Funktionsweise eines Verbindungselements mit Sicherheitsplatten
Fig. 4 Veranschaulichung einer Einsatzmöglichkeit der Begrenzungsvorrichtungen bei Veranstaltungen

Die Beispiele dienen allein der Illustration bevorzugter Ausführungsformen und sollen die Erfindung nicht beschränken.

Fig. 1 a zeigt eine Begrenzungsvorrichtung, die auch als Zaun einsetzbar ist. Im gezeigten Beispiel bestehen die einzelnen Pfosten 1, mit Ausnahme des im Erdboden befindlichen unteren Pfostenabschnitts 1c, aus einem flexiblen Material. Die aus dem flexiblen Material bestehenden Pfostenabschnitte 1 a sind bogenförmig angeordnet, wobei der bogenförmige Abschnitt jeweils zur horizontalen Ausdehnung der Begrenzungsrichtung beiträgt. Die Verbindungselemente 2 werden im gezeigten Beispiel durch den hakenförmig ausgebildeten Endabschnitt eines jeden Pfostens gebildet. Das Fixierelement 3 fixiert die Höhe des hakenförmig ausgebildeten Endabschnitts nach der Befestigung am jeweils benachbarten Pfosten. Im gezeigten Beispiel werden zunächst die in der Figur links gezeigten Pfosten miteinander verbunden. Der dem Endpfosten 7 benachbarte Pfosten 1 wird zuletzt mit dem links liegenden ebenfalls aus flexiblem Material bestehenden Pfostenabschnitt 1c verbunden. Abschließend wird die miteinander verbundene Reihe der Pfosten durch das Spannelement 8 an dem Endpfosten 7 in seiner endgültigen Position fixiert.

Die einzelnen aus flexiblem Material bestehenden Pfosten 1 weisen an dem jeweils höchsten Punkt des Bogens ein Befestigungselement 5a für einen Draht 6 auf. Der Draht ist am Endpfosten 7 durch das Befestigungselement 5c fixiert. Weiterhin weist der Zaun auf etwa halber Höhe den zusätzlichen Querdraht 6b auf, der ebenfalls am Endpfosten 7 fixiert ist. Die Drähte 6 können auch als sog. Elektrobänder (Elektrozaunbänder) ausgebildet sein. Diese Elektrobänder sind Kunststoffbänder mit eingeflochtenen Edelstahldrähten, die elektrisch leitend sind und im Zusammenhang mit elektrischen Weidezäunen eingesetzt werden.

Untenseitig weisen die einzelnen Pfosten 1 an dem sich im Erdreich befindlichen Endabschnitt einen Erdanker 9a auf. Der Erdanker 9a ist so ausgebildet, dass er sich unter der vom jeweils benachbarten Pfosten ausgehenden Zugspannung in seitlicher Richtung in das Erdreich eingräbt und dadurch den jeweiligen Pfosten zusätzlich verankert. Im gezeigten Beispiel ist der Erdanker 9a seitlich als Sägezahnmuster ausgebildet. Das Sägezahnmuster des Erdankers 9a verjüngt sich nach unten hin, d.h. in Richtung der sich im Erdreich befindlichen Pfostenspitze. Die keilförmige Ausbildung des Erdankers, d.h. die Verjüngung zur unteren Pfostenspitze hin, erlaubt die leichtere Verankerung des Pfostens und hat den Vorteil, dass die Pfosten mithilfe eines Spatens, der entlang der Seitenkante des Erdankers eingestochen wird und dann zur Lockerung des Pfostens in Richtung des Pfosten bewegt wird, leicht aus dem Erdreich entfernt werden kann, falls der Zaun abgebaut werden soll.

Fig. 1 b zeigt einen Zaun, dessen Pfosten 1 jeweils nur abschnittsweise aus einem flexiblen Material bestehen. Im gezeigten Beispiel ist der obere Abschnitt 1a aus einem flexiblen Material, während der im wesentlichen senkrecht verlaufende Abschnitt 1 b aus einem starren Material besteht. Die durch das Verbindungselement 2 zum jeweils benachbarten Pfosten 1 hergestellte Verbindung befindet sich jeweils in dem Pfostenabschnitt 1 a, der aus dem flexiblen Material besteht. Auf halber Höhe der Pfostenabschnitte 1 b ist ein zusätzlicher Draht 6a gespannt, der mithilfe des Befestigungselements 5b, die aus einem elektrisch isolierenden Material, zum Beispiel aus Plastik, bestehen, an den Pfostenabschnitten 1 b befestigt ist. Der Draht 6 ist endseitig am Endpfosten 7 mithilfe des Verbindungselementes 5c fixiert.

Der dem Endpfosten 7 benachbarte Pfosten ist mit dem Spannelement 8 am Endpfosten 7 befestigt.

Fig. 1c zeigt eine Ausführungsform des Zauns, die sich dadurch auszeichnet, dass die jeweils benachbarten Pfosten 1 in eine wechselseitige Richtung gebogen sind. Dadurch bilden jeweils zwei benachbarte Pfosten 1a, die im gezeigten Beispiel durchgängig aus einem flexiblen Material bestehen, einen geschlossenen Bogen. Die Verbindung der beiden einen nach oben hin geschlossenen Bogen bildenden Pfostenabschnitte 1a kann auf verschiedene Weise erfolgen. In dem in Fig.1c gezeigten Beispiel sind die Pfostenabschnitte 1a des mittleren Bogens durch die endseitig hakenförmig ausgebildeten Pfostenabschnitte 1a miteinander verbunden. Alternativ kann die Verbindung zwischen den Pfostenabschnitten 1a, die sich so wie bei den beiden in Fig. 1 c links und rechts gezeigten Bögen zu sehen, abschnittsweise überlappen, durch eine Klemmverbindung im Überlappungsabschnitt hergestellt werden. Die Klemmverbindung kann zum Beispiel durch das Befestigungselement 5a hergestellt werden, das auf den Überlappungsabschnitt aufgeklemmt wird und zugleich obenseitig eine Vorrichtung zur Befestigung für einen Draht aufweist. Alternativ oder ergänzend können die sich überlappenden Pfostenabschnitte 1a, so wie im linken Bogen gezeigt, durch Kabelbinder fixiert werden. Die wechselseitig gebogenen Pfostenabschnitte sind jeweils paarweise in den Erdboden eingelassen. In dem in Fig. 1 c gezeigten Beispiel wird dafür ein vorgefertigter Bodenanker 9 verwendet. Der Vorteil der in Fig. 1 c gezeigten Anordnung der flexiblen Pfosten im Vergleich zu der in Fig. 1 a oder 1 b gezeigten Anordnung besteht darin, dass die Zahl der für die Montage des in Fig. 1c gezeigten Zauns um die Hälfte geringer ist als in den beiden erst genannten Beispielen. Die kann besonders bei steinigem Untergrund von großem Vorteil sein, weil insgesamt weniger Pfosten 1 verankert werden müssen.

Auf etwa halber Höhe weist der Zaun den Draht 6a auf, der durch die Befestigungselemente 5b an den aus flexiblem Material bestehenden Pfostenabschnitten 1a befestigt ist.

Fig. 2a zeigt einen Zaun, dessen mehrteilige Pfosten 11 jeweils zwei Einzelpfosten 1 umfassen, d.h. jeder Pfosten 11 umfasst einen langen Abschnitt und einen kürzeren Abschnitt. Beide Abschnitte sind mit dem jeweils benachbarten Pfosten 11 durch das Verbindungselement 2 auf jeweils unterschiedlicher Höhe verbunden. Dabei beschreibt der längere Abschnitt im Vergleich zum kürzeren Abschnitt den größeren Bogen. Der benachbart zum Endpfosten 7 angeordnete Pfosten weist zwischen dem genannten größeren und kleineren Bogen zusätzlich einen Polyesterstoff als flächiges Gebilde 10 auf. Der Polyesterstoff 13 kann zur besseren Wahrnehmung der Begrenzungsvorrichtung durch Mensch und Tier mit einer Signalfarbe gestaltet sein. Somit dient der Polyesterstoff 13 zur Stabilsierung der beiden übereinander angeordneten Bögen und zur besseren Sichtbarkeit. Um zu verhindern, dass das flächige Gebilde 13 im Wind flattert, kann das flächige Gebilde eine Vielzahl von regelmäßig beabstandeten kleinen Öffnungen, die dem Gebilde insgesamt eine netzartige Struktur ergeben, aufweisen. Alternativ lässt sich der Polyesterstoff, der zwischen den beiden Bögen gespannt ist, als Werbeträger nutzen. In den Abschnitten des größeren Bogens, an dem die Befestigung der Verbindungselemente 2 vorgesehen ist, ist der Polyesterstoff ausgespart.

Im nicht montierten Zustand ist sowohl der längere als auch der kürzere Einzelpfosten 1 des mehrteiligen Pfostens 11 im Wesentlichen linear ausgerichtet, wobei der Polyesterstoff schlaff zwischen den beiden Pfostenabschnitten hängt und dadurch der Pfosten 11 insgesamt sehr Platz sparend aufbewahrt werden kann. Bei dem in Fig. 2a gezeigten Beispiel ist zwischen den in der Mitte gezeigten, zu einem Pfosten gehörenden Pfostenabschnitten 1 a, kein Polyesterstoff vorgesehen.

Auf halber Höhe weist der Zaun einen zusätzlichen Draht 6a auf, der an den einzelnen Pfosten mithilfe der Befestigungselemente 5b befestigt ist. Endseitig ist der Draht 6a am Endpfosten 7 durch das Befestigungselement 5c fixiert. Die in Fig. 2a gezeigten Pfosten 11 weisen an den bodenständigen Endabschnitten den Erdanker 9a auf. Die zweigliedrig aufgebauten mehrteiligen Pfosten 11 sind in diesem Abschnitt nicht mehr zweigliedrig, sondern einheitlich zusammengeführt und von einer Hülse 12 umgeben, welche die Einzelpfosten 1 fest miteinander verbindet. Die Hülse kann aus Kunststoff oder nachträglich aufgepresstem Stahl bestehen.

Mithilfe der Befestigungselemente 5a, die auf den oberen Bogenabschnitt 1a aufgeklemmt sind, ist ein zusätzlicher Draht 6a befestigt. Dieser den oberen Abschluss bildende Draht ist am Endpfosten 7 durch das Befestigungselement 5c fixiert.

Falls der Erdanker, wie in Fig. 2a gezeigt, nach unten keilförmig verläuft, d.h. sich nach unten hin verjüngt, lässt sich der Posten durch einen herkömmlichen Spaten, mit dem nach dem Einstechen ins Erdreich gegen den längsten oberen querstehenden Abschnitt des Erdankers gedrückt wird, leicht wieder aus dem Erdreich entfernen.

Fig. 2b zeigt einen Zaun, der wiederum aus eingliedrigen Pfosten aufgebaut ist, die (mit Ausnahme des bodenseitigen Abschnitts 1 c) über ihre gesamte Länge aus flexiblem Material bestehen und daher im Wesentlichen über ihre ganze Länge bogenförmig verlaufen. Die Pfosten 1 a weisen an ihrem oberen Ende die Verbindungselemente 2 auf. Im gezeigten Beispiel sind die Verbindungselemente 2 nicht als Haken, sondern als Klemmbacken 2a ausgestaltet. Die Innenseite der beiden Klemmelemente 2a weist ein elastisches Material auf. Der Abstand zwischen den beiden Klemmelementen 2a ist etwas geringer bemessen als der Durchmesser des Pfostens 1 im betreffenden Abschnitt 1 b. Dadurch ist es möglich, das Verbindungselement 2 unter leichtem Anpressdruck am jeweils benachbarten Pfosten 1 anzubringen. Beim abschließenden Anlegen des Spannelementes 8 werden die den Zaun charakterisierenden Bögen ausgebildet. Mit zunehmender Ausbildung der Bögen kommt es zu einem Verkanten der Klemmelemente 2a und somit zu einer zunehmenden Stabilisierung der Verbindung zwischen den einzelnen Pfosten.

Zwei der drei in Fig. 2b gezeigten Bögen weisen zusätzlich im Bogenbereich einen Polyesterstoff 10 als flächiges Gebilde auf. Im Falle des Pfostens, der dem Endpfosten 7 benachbart ist, ist der Polyesterstoff 10 so geschnitten, dass er den gesamten Bogenbereich, mit Ausnahme des Abschnitts, in dem das Spannelement 8 befestigt ist, ausfüllt. Bei dem in Fig. 2b links gezeigten Pfosten ist der Polyesterstoff 10 so geschnitten, dass er den Bogen nicht vollständig ausfüllt, sondern diagonal über den Bogen gespannt ist. Beide Polyesterstoffe 10 bestimmen die jeweilige Bogenweite. Wenn bei der Montage des Zauns abschließend mit dem Spannelement 8 auf die in Reihe stehenden Pfosten 1 a Zugspannung gebracht wird, geht von den unter der Zugspannung entfalteten Polyesterstoffen 10 eine Gegenkraft aus. Auf diese Weise tragen die Polyesterstoffe zur zusätzlichen Stabilisierung des Zauns bei.

Der in Fig. 2b gezeigte Zaun weist auf etwa halber Höhe den zusätzlichen Draht 6a auf, der mithilfe der Befestigungselemente 5b an den Pfostenabschnitten 1 a befestigt ist. Endseitig ist der Draht 6a durch das Befestigungselement 5c am Endpfosten 7 fixiert.

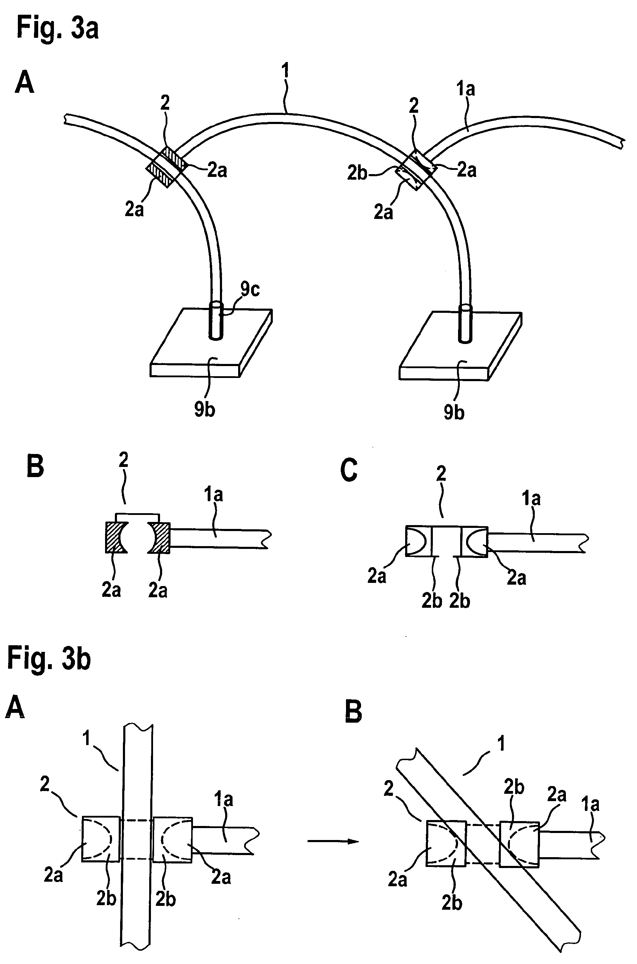

Fig. 3a zeigt im Teilbild A drei Pfosten 1 aus einem flexiblen Material, die durch die Verbindungselemente 2 miteinander verbunden sind. Die Verbindung zwischen den Pfosten 1 stabilisiert sich mit dem Umbiegen des oberen Pfostenabschnitts. Die Verbindungselemente 2 sind im gezeigten Beispiel jeweils am Ende des oberen Pfostenabschnitts angeordnet. Die Verbindungselemente 2 weisen jeweils zwei Klemmelemente 2a auf, welche den benachbarten Pfosten umfassen. Im gezeigten Beispiel sind die Pfosten 1 in den Ballastelementen 9b verankert. Zu diesem Zweck weisen die Ballastelemente 9b nach oben gerichtete Öffnungen 9c auf. Im linken Beispiel weist die Öffnung 9c zusätzlich eine seitliche Öffnung auf, in die ein im unteren Pfostenabschnitt angeordneter Vorsprung hineinragt. Auf diese Weise kommt es zu einer Absicherung des Pfostens gegen das Herausrutschen. Vorteilhafterweise ist eine weitere Sicherung nicht erforderlich, da der Pfosten der durch die Biegung entstehenden Kraft, im unteren Abschnitt ausweicht, so dass der Vorsprung in die seitliche Öffnung hineingepresst wird. Dieser Selbstsicherungseffekt geht auf die elastischen Materialeigenschaften der Pfosten 1 zurück.

Im Bild B ist eine mögliche flexible Ausführungsform eines Verbindungselementes 2 gezeigt. In diesem Fall besteht das Verbindungselement 2 aus den beiden Klemmelementen 2a, die an einer Seite miteinander verbunden sind. An der frei bleibenden offenen Seite wird das Verbindungselement 2 über den sich noch in vertikaler Ausrichtung befindenden benachbarten Pfosten gedrückt, so dass die beiden Klemmelemente 2a den benachbarten Pfosten abschnittsweise seitlich umschließen. Der Abstand zwischen den beiden Klemmelementen 2a ist so bemessen, dass dieser geringfügig größer, gleich oder geringfügig kleiner ist als der Durchmesser des benachbarten Pfostens im betreffenden Abschnitt. Dadurch kommt es beim Umbiegen des benachbarten Pfostens zu einer Verfestigung des durch das Verbindungselement 2 hergestellten Kontaktes. Zur zusätzlichen Absicherung der durch das Verbindungselement 2 hergestellten Verbindung können die beiden Klemmelemente 2a innenseitig eine Vertiefung aufweisen, die der Rundung des benachbarten Pfostens entspricht. Um das Verrutschen der Klemmelemente zu vermeiden, können diese innenseitig aus einem gummiartigen Material bestehen oder mit einem gummiartigen Material beaufschlagt sein, so dass die Reibung gegenüber der Oberfläche des Pfostens 1 erhöht ist.

Im Bild C der Fig. 3a ist ein besonders bevorzugtes Verbindungselement 2 gezeigt. Dieses Verbindungselement 2 ist ebenfalls am Ende eines oberen Pfostenabschnittes 1a angeordnet und besteht aus den beiden Klemmelementen 2a. Zusätzlich weist dieses besonders bevorzugte Verbindungselement die beiden Sicherungsplatten 2b auf. Die Funktionsweise der Sicherungsplatten 2b ist in Fig. 3b gezeigt.

Fig. 3b zeigt die Funktionsweise eines besonders bevorzugten Verbindungselementes 2, das zur Verbindung der erfindungsgemäßen Pfosten zur Herstellung einer Begrenzungsvorrichtung eingesetzt werden kann.

Das Bild A in Fig. 3b zeigt das Verbindungselement 2, das am oberen Pfostenabschnitt 1 a des ersten Pfostens angeordnet ist. Die beiden zum Verbindungselement 2 gehörenden Klemmelemente 2a sind auf einer Seite miteinander verbunden, so dass auf der offen gebliebenen, gegenüberliegenden Seite der benachbarte Pfosten 1 eingedrückt werden kann. Die beiden Klemmelemente 2a sind abgerundet und liegen nur mit dem vorderen Teil der Rundung an dem Pfosten 1 an. Auf den beiden Klemmelementen 2a liegen seitlich die Sicherungsplatten 2b auf. In horizontaler Richtung sind die auf den Klemmelementen 2a aufliegenden Sicherungsplatten 2b so beabstandet, dass der benachbarte Pfosten 1 während des Aufbaus der Begrenzungsvorrichtung ohne Behinderung durch die Sicherungsplatten 2b zwischen die Klemmelemente 2a eingefügt werden kann.

Bild B in Fig. 3b zeigt den von den Sicherungsplatten 2b ausgehenden Sicherungseffekts beim Umbiegen des im Verbindungselement 2 positionierten Pfostens 1. Beim Umbiegen des Pfostens 1 erlauben die abgerundet gestalteten Klemmelemente 2a eine Schrägstellung des Pfostens 1. Im schrägen, d.h. im aufgebauten, Zustand wird der Pfosten 1 jedoch teilweise durch die beiden in ihrer Position im Vergleich zu Bild A unveränderten Sicherungsplatten 2b abgedeckt und dadurch gesichert. Diese zumindest teilweise Abdeckung des Pfostens durch die Sicherungsplatten 2b verhindert, dass der Pfosten 1 wieder aus der seitlichen Öffnung des Verbindungselementes 2 heraus gleiten kann. Die Sicherungsplatten können Sollbruchstellen aufweisen, so dass sich in Paniksituationen die Verbindung zum benachbarten Pfosten leichter löst. Bei Demontage der Begrenzungsvorrichtung kommt es wieder zur vertikalen Ausrichtung des benachbarten Pfostens, so dass der in Bild A gezeigte Zustand wiederhergestellt wird und das Verbindungselement 2 vom Pfosten 1 leicht entfernt werden kann, da der Pfosten 1 in diesem In Bild A gezeigten Zustand nicht von den Sicherungsplatten 2b überdeckt wird.

Ein ähnlicher Sicherungseffekt wie bei dem in Fig. 3b Bild B gezeigten Verbindungselement kann erzielt werden mit einem Verbindungselement, das mittig eine kreisrunde Öffnung zur Aufnahme des jeweils benachbarten Pfostens aufweist und ebenfalls, wie das in Fig. 3a Bild B gezeigte Verbindungselement an einer Seite offen ist, so dass der jeweils benachbarte, beim Aufbau noch im Wesentlichen senkrecht ausgerichtete Pfosten, seitlich eingeführt werden kann. Die Besonderheit dieser alternativen Ausführungsform eines Verbindungselements besteht darin, dass sich der Querschnitt der mittigen Öffnung, ausgehend von der Mitte, nach oben und unten trichterförmig aufweitet. Die Aufweitung des Trichters ist so gestaltet, dass die Außenseite des benachbarten Pfostens in der aufgebauten Begrenzungsvorrichtung flächig an den beiden diagonal zueinander angeordneten Innenseiten der beiden Trichter zu liegen kommt. Aufgrund des flächigen Kontakts wird die Gefahr des Verrutschens vermindert.

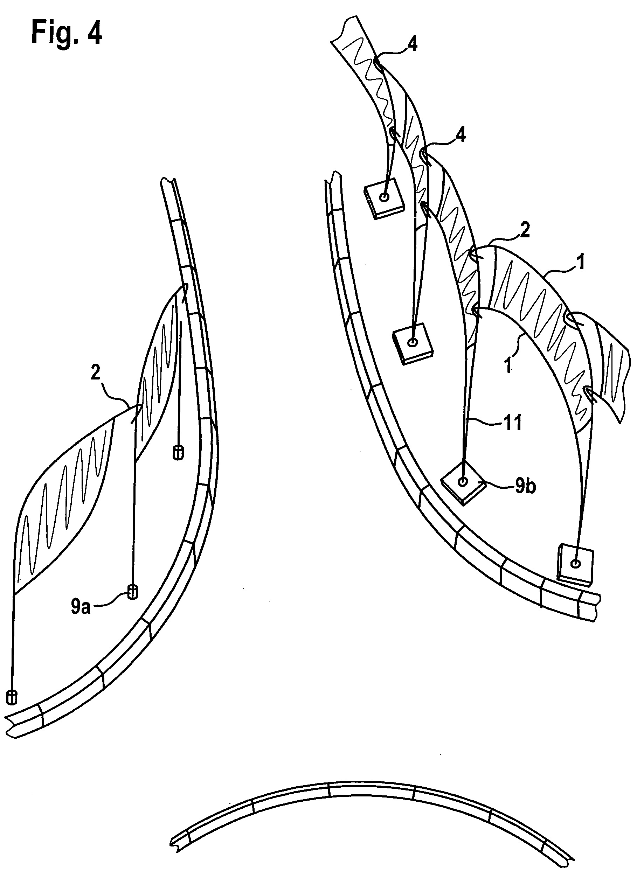

Fig. 4 zeigt eine Einsatzmöglichkeit einer aus mehrteiligen Pfosten 11 aufgebauten Begrenzungsvorrichtung. Ein Einsatz dieser Art kann zum Beispiel bei Sportveranstaltungen wie Marathonläufen interessant sein. Die auf der linken Seite gezeigte Begrenzungsvorrichtung ist aus einteiligen Pfosten aufgebaut, die in Öffnungen versenkt sind, welche bereits auf dem Gehweg vorgesehen sind. In dem vor dem Verbindungselement 2 liegenden bogenförmigen Abschnitt weisen die Pfosten 11 eine Bespannung mit einem flächigen, flexiblen Material, wie zum Beispiel Polyester, auf.

Die auf der rechten Seite gezeigte Begrenzungsvorrichtung ist aufgebaut aus mehrteiligen Pfosten 11, die in den Ballastelementen 9b fixiert sind. Die mehrteiligen Pfosten 11 sind jeweils durch die Verbindungselemente 2 in gebogenem Zustand miteinander verbunden. Die zwischen den beiden zu einem mehrteiligen Pfosten 11 gehörenden Einzelpfosten 1 liegende und so teilweise von den Einzelpfosten umgrenzte Fläche, ist mit einem flächigen, flexiblen Material, wie zum Beispiel einem Polyesterstoff, der für Werbezwecke bedruckt werden kann, bespannt.

### Bezugszeichenliste

- 1: Pfosten (Einzelpfosten)
- 1a: oberer Pfostenabschnitt
- 1b: mittlerer Pfostenabschnitt
- 1c: unterer Pfostenabschnitt
- 2: Verbindungselement
- 2a: Klemmelement
- 2b: Sicherungsplatten
- 3: Fixierelement zur Festlegung der Höhe des Verbindungselementes
- 4: Öffnung in dem flächigen Gebilde
- 5a: Befestigungselement für Querdraht
- 5b: Befestigungselement für Querdraht
- 5c: Befestigungselement für Querdraht
- 6a: oberer Draht / alternativ oberes Elektroband
- 6b: unterer Draht / alternativ unteres Elektroband
- 7: Endpfosten (starr)
- 8: Spannelement
- 9a: Erdanker
- 9b: Ballastelement
- 9c: Öffnung im Ballastelement
- 10: Flächiges Gebilde aus flexiblem Material
- 11: Mehrteiliger Pfosten
- 12: Hülse

## Patentansprüche

1. Transportable Begrenzungsvorrichtung mit mehreren voneinander beabstandet angeordneten Pfosten (1), die jeweils zumindest abschnittsweise aus einem flexiblen Material bestehen, **dadurch gekennzeichnet, dass** in der aufgebauten Begrenzungsvorrichtung
- der aus dem flexiblen Material bestehende Pfostenabschnitt (1a, 1 b, 1 c) bei allen Pfosten (1) oder zumindest bei einem Teil der Pfosten (1) so angeordnet ist, dass
- dieser Abschnitt bogenförmig in die Richtung eines benachbarten Pfostens (1) verläuft, und
- dieser Abschnitt aufgrund der flexiblen Materialeigenschaften unter Spannung steht, wobei
- der obere Pfostenabschnitt (1 a), welcher auf den bogenförmig verlaufenden Abschnitt des Pfostens (1) folgt, jeweils lösbar mit dem benachbarten Pfosten (1) verbunden ist.

2. Transportable Begrenzungsvorrichtung nach Anspruch 1, **dadurch gekennzeichnet, dass** die Pfosten (1) jeweils über ihre gesamte Länge aus einem flexiblen Material bestehen.

3. Transportable Begrenzungsvorrichtung nach Anspruch 1, **dadurch gekennzeichnet, dass** die Pfosten (1) unterteilt sind in einen oberen und einen zwischen dem oberen Pfostenabschnitt (1 a) und dem unteren Pfostenabschnitt (1c) liegenden mittleren Pfostenabschnitt (1b), wobei der mittlere Pfostenabschnitt (1b) aus einem flexiblen Material besteht.

4. Transportable Begrenzungsvorrichtung nach Anspruch 3, **dadurch gekennzeichnet, dass** die lösbare Verbindung (2) zwischen dem oberen Pfostenabschnitt (1 a) eines ersten Pfostens (1), mit einem benachbarten zweiten Pfosten (1) jeweils in dem zwischen dem oberen Pfostenabschnitt (1 a) und dem unteren Pfostenabschnitt (1c) liegenden mittleren Pfostenabschnitt (1b) des benachbarten Pfostens (1) angeordnet ist.

5. Begrenzungsvorrichtung nach einem der Ansprüche 1 bis 4, **dadurch gekennzeichnet, dass** das flexible Material aus einem elastischen Kunststoff oder aus einem elastischen Metall ist.

6. Begrenzungsvorrichtung nach Anspruch 5, **dadurch gekennzeichnet, dass** das flexible Material aus Fiberglas oder einem kohlefaserverstärktem Material ist.

7. Begrenzungsvorrichtung nach Anspruch 5, **dadurch gekennzeichnet, dass** das flexible Material aus zwei oder mehreren Metallstäben mit jeweils rundem Querschnitt besteht, wobei die Metallstäbe zur Erhöhung der Stabilität des aus dem flexiblen Material bestehenden Pfosten (1), bzw. Pfostenabschnitts, in Längsrichtung, vergleichbar mit den einzelnen Strängen eines Seils, umeinander gewunden sind.

8. Begrenzungsvorrichtung nach einem der Ansprüche 1 bis 7, **dadurch gekennzeichnet, dass** jeweils am oberen Pfostenabschnitt (1 a), ein Verbindungselement (2) angeordnet ist, das aus zwei voneinander beabstandeten Klemmelementen (2a) besteht, wobei der Abstand zwischen den Klemmelementen (2a) gleich oder etwas geringer bemessen ist als der Querschnitt des benachbarten Pfostens (1), in jenem Pfostenabschnitt (1 a, 1 b), der für die Anbringung des Verbindungselements (2) zur Herstellung einer lösbaren Verbindung zwischen zwei benachbarten Pfosten (1) vorgesehen ist.

9. Pfosten (1) zum Aufbau einer Begrenzungsvorrichtung nach einem der Ansprüche 1 bis 8, **dadurch gekennzeichnet, dass** zur Herstellung einer lösbaren Verbindung mit dem benachbarten Pfosten (1) entweder
- das Ende des oberen Pfostenabschnitts hakenartig umgebogen ist, oder
- im Bereich des oberen Pfostenabschnitts (1a) als Verbindungselement mindestens ein Haken (2) angeordnet ist, wobei die Öffnung des Hakens (2) im nicht gebogenen Zustand des Pfostens (1), in die Richtung des unteren Pfostenabschnitts (1c) zeigt, und
- jeder Pfosten (1) zur Festlegung der Höhe des zum benachbarten Pfosten gehörenden Verbindungselements (2) im Bereich des bogenförmig verlaufenden Abschnitts ein Fixierelement (3) aufweist.

10. Pfosten (1) zum Aufbau einer Begrenzungsvorrichtung nach einem der Ansprüche 1 bis 8, **dadurch gekennzeichnet, dass** am oberen Pfostenabschnitt (1 a) ein Verbindungselement (2) angeordnet ist, wobei
- das Verbindungselement (2) aus zwei voneinander beabstandeten Klemmelementen (2a) besteht, und
- die Klemmelemente (2a) so miteinander verbunden sind, dass der Abstand zwischen den Klemmelementen (2a) etwa dem Querschnitt des benachbarten Pfostens (1), in jenem Pfostenabschnitt entspricht, in dem die Anbringung des Verbindungselements (2) zur Herstellung einer lösbaren Verbindung mit dem jeweils benachbarten Pfosten (1) vorgesehen ist.

11. Pfosten (1) nach einem der Ansprüche 9 und 10, **dadurch gekennzeichnet, dass** der Pfosten (1) in dem aus einem flexiblen Material bestehenden Pfostenabschnitt (1a, 1b) einen Bogen von kreisrunder bis ellipsoider Form aufweist, dessen Winkel im dem Bereich von 70° bis 180° liegt, wobei
- die von dem Bogen umschriebene Fläche zumindest zum Teil durch ein flächiges Gebilde (10) aus flexiblem Material belegt ist, und
- das flächige Gebilde (10) aus einem flexiblen Material mit dem den Bogen beschreibenden Pfostenabschnitt über dessen gesamte Länge oder mindestens mit zwei sich gegenüberliegenden Bogenabschnitten (1 a, 1 b) fest oder lösbar verbunden ist.

12. Pfosten (1) nach Anspruch 11, **dadurch gekennzeichnet, dass** das aus einem flexiblen Material bestehende flächige Gebilde (10) aus einem Polyesterstoff, einem Kunststoffnetz, einem Baumwollstoff oder aus einem Vlies oder Filz ist.

13. Mehrteiliger Pfosten (11) umfassend zwei oder mehrere Einzelpfosten (1) gemäß einem der Ansprüche 9 bis 12, wobei die Einzelpfosten (1), jeweils eine unterschiedliche Höhe aufweisen, und
die Einzelpfosten (1) in dem mehrteiligen Pfosten (11)
- untenends bündig miteinander abschließen, und
- bei bündelartiger Anordnung fest miteinander verbunden sind.

14. Mehrteiliger Pfosten (11) nach Anspruch 13, **dadurch gekennzeichnet, dass** die Verbindung zwischen den untenends bündelartig angeordneten Pfosten durch eine Hülse (12) aus Kunststoff oder Metall hergestellt wird, welche die Einzelpfosten (1) umgibt.

15. Mehrteiliger Pfosten (11) nach Anspruch 14, **dadurch gekennzeichnet, dass** die als Erdanker (9a) ausgebildete Hülse (12) außenseitig eine unebene Oberfläche mit über die Oberfläche hinausragenden Querelementen aufweist, wobei die Querelemente zur seitlichen Verankerung des Pfostens (11) dienen.

16. Mehrteiliger Pfosten (11) nach einem der Ansprüche 13 bis 15, **dadurch gekennzeichnet, dass** jeweils zwei zu einem mehrteiligen Pfosten (11) gehörende Einzelpfosten (1) mit unterschiedlicher Länge entlang ihrer Längsrichtung durch ein aus einem flexiblen Material bestehendes flächiges Gebilde (10), das aus einem gewobenen oder nicht gewobenen Material besteht, miteinander verbunden sind.

17. Begrenzungsvorrichtung aufgebaut aus mehreren mehrteiligen Pfosten (11) gemäß einem Ansprüche 13 bis 16.

18. Begrenzungsvorrichtung nach Anspruch 17 aufgebaut aus mehreren gleichen mehrteiligen Pfosten (11) gemäß einem der Ansprüche 13 bis 16, wobei
- die Einzelpfosten (1) in der aufgebauten Begrenzungsvorrichtung so angeordnet sind, dass sie jeweils im Bereich ihres flexiblen Abschnitts bogenförmig in Richtung des Nachbarpfostens (1) verlaufen, mit welchem sie fest oder lösbar verbunden sind, und
- die Einzelpfosten (1) entsprechend ihrer unterschiedlichen Länge übereinander liegende Bögen von jeweils unterschiedlicher Größe beschreiben.

19. Verwendung einer Vielzahl der Pfosten (1) gemäß einem der Ansprüche 9 bis 12 oder einer Vielzahl mehrteiligen Pfosten (11) gemäß einem der Ansprüche 13 bis 16 zum Aufbau einer als Weidezaun dienenden Begrenzungsvorrichtung und Verwendung eines Pfosten (1) gemäß einem der Ansprüche 9 bis 12 oder eines mehrteiligen Pfosten (11) gemäß einem der Ansprüche 13 bis 16 zum Aufbau eines Weidetors.

20. Verwendung einer Vielzahl der Pfosten (1) gemäß einem der Ansprüche 9 bis 12 oder einer Vielzahl mehrteiligen Pfosten (11) gemäß einem der Ansprüche 13 bis 16 zum Aufbau einer Vorrichtung zu Werbezwecken oder zum Aufbau einer Barriere bei Veranstaltungen.

## Claims

1. Transportable boundary demarcation apparatus having multiple posts (1) disposed spaced apart from one another, which consist, in each instance, at least in certain sections, of a flexible material, **characterized in that** in the set-up boundary demarcation apparatus,
- the post section (1a, lb, 1c) that consists of the flexible material is disposed, in all the posts (1) or at least in a part of the posts (1), in such a manner that
- this section runs in arc shape in the direction of an adjacent post (1), and
- this section stands under tension due to the flexible material properties, wherein
- the upper post section (1a), which follows the section that runs in arc shape, of post (1) is releasably connected with the adjacent post (1), in each instance.

2. Transportable boundary demarcation apparatus according to claim 1, **characterized in that** the posts (1) consist of a flexible material over their entire length, in each instance.

3. Transportable boundary demarcation apparatus according to claim 1, **characterized in that** the posts (1) are divided into an upper and a center post section (1b) that lies between the upper post section (1a) and the lower post section (1c), wherein the center post section (1b) consists of a flexible material.

4. Transportable boundary demarcation apparatus according to claim 3, **characterized in that** the releasable connection (2) between the upper post section (1a) of a first post (1) with an adjacent second post (1) is disposed, in each instance, in the center post section (1b) that lies between the upper post section (1a) and the lower post section (1c) of the adjacent post (1).

5. Boundary demarcation apparatus according to one of claims 1 to 4, **characterized in that** the flexible material is made of an elastic plastic or an elastic metal.

6. Boundary demarcation apparatus according to claim 5, **characterized in that** the flexible material is made of fiberglass or a carbon-fiber-reinforced material.

7. Boundary demarcation apparatus according to claim 5, **characterized in that** the flexible material consists of two or more metal rods having a round cross-section, in each instance, wherein the metal rods are wound around one another, comparable to the individual strands of a rope, to increase the stability of the post (1) or post section that consists of the flexible material, in the longitudinal direction.

8. Boundary demarcation apparatus according to one of claims 1 to 7, **characterized in that** a connection element (2) is disposed on the upper post section (1a), in each instance, which element consists of two clamping elements (2a) spaced apart from one another, wherein the distance between the clamping elements (2a) is dimensioned to be the same or slightly less than the cross-section of the adjacent post (1), in the specific post section (1a, 1b) that is provided for affixing the connection element (2), for production of a releasable connection between two adjacent posts (1).

9. Post (1) for construction of a boundary demarcation apparatus according to one of claims 1 to 8, **characterized in that** for production of a releasable connection with the adjacent post (1), either
- the end of the upper post section is bent around, in hook-like manner, or
- at least one hook (2) is disposed in the region of the upper post section (1a), as a connection element, wherein the opening of the hook (2), in the non-bent state of the post (1), points in the direction of the lower post section (1c), and
- each post (1) has a fixation element (3) in the region of the section that runs in arc shape, to establish the height of the connection element (2) that belongs to the adjacent post.

10. Post (1) for construction of a boundary demarcation apparatus according to one of claims 1 to 8, **characterized in that** a connection element (2) is disposed on the upper post section (1a), wherein
- the connection element (2) consists of two clamping elements (2a) spaced apart from one another, and
- the clamping elements (2a) are connected with one another in such a manner that the distance between the clamping elements (2a) approximately corresponds to the cross-section of the adjacent post (1), in the specific post section that is provided for affixing the connection element (2), for production of a releasable connection with the adjacent post (1), in each instance.

11. Post (1) according to one of claims 9 and 10, **characterized in that** the post (1), in the post section (1a, 1b) that consists of a flexible material, has an arc with a circular to ellipsoid shape, the angle of which lies in the range of 70° to 180°, wherein
- the surface area circumscribed by the arc is covered, at least in part, by a planar structure (10) made of flexible material, and
- the planar structure (10) made of a flexible material is firmly or releasably connected with the post section that describes the arc, over its entire length, or at least with two arc sections (1a, 1b) that lie opposite one another.

12. Post (1) according to claim 11, **characterized in that** the planar structure that consists of a flexible material is made of a polyester fabric, a plastic netting, a cotton fabric, or of a nonwoven fabric or felt.

13. Multi-part post (11) comprising two or more individual posts (1) according to one of claims 9 to 12, wherein the individual posts (1) have a different height, in each instance, and the individual posts (1) in the multi-part post (11)
- end flush with one another at the bottom end, and
- are firmly connected with one another, in the case of a bundle-like arrangement.

14. Multi-part post (11) according to claim 13, **characterized in that** the connection between the posts that are disposed in bundle-like manner, at the bottom end, is produced by means of a sleeve (12) made of plastic or metal, which surrounds the individual posts (1).

15. Multi-part post (11) according to claim 14, **characterized in that** the sleeve (12), which is configured as a ground anchor (9a), has an uneven surface with transverse elements that project out of the surface, on the outside, wherein the transverse elements serve for lateral anchoring of the post (11).

16. Multi-part post (11) according to one of claims 13 to 15, **characterized in that** two individual posts (1) that belong to a multi-part post (11), in each instance, having different lengths, are connected with one another along their longitudinal direction by means of a planar structure (10) that consists of a flexible material, which structure consists of a woven or nonwoven material.

17. Boundary demarcation,apparatus constructed of multiple multi-part posts (11) according to one of claims 13 to 16.

18. Boundary demarcation apparatus according to claim 17, constructed of multiple multi-part posts (11) according to one of claims 13 to 16, wherein
- the individual posts (1) are disposed, in the set-up boundary demarcation apparatus, in such a manner that they run in arc shape in the direction of the neighboring post (1), with which they are firmly or releasably connected, in the region of their flexible section, in each instance, and
- the individual posts (1) describe arcs of a different size, in each instance, which arcs lie on top of one another, in accordance with their different lengths.

19. Use of a plurality of posts (1) according to one of claims 9 to 12 or a plurality of multi-part posts (11) according to one of claims 13 to 16 for construction of a boundary demarcation apparatus that serves as a pasture fence, and use of a post (1) according to one of claims 9 to 12 or a multi-part post (11) according to one of claims 13 to 16 for construction of a pasture gate.

20. Use of a plurality of posts (1) according to one of claims 9 to 12 or a plurality of multi-part posts (11) according to one of claims 13 to 16 for construction of an apparatus for advertising purposes or for construction of a barrier at events.

## Revendications

1. Dispositif de limitation transportable avec plusieurs poteaux (1) disposés espacés les uns des autres, qui sont respectivement constitués d'un matériau flexible au moins sur des portions, **caractérisé en ce que**, dans le dispositif de limitation monté,
- la portion de poteau constituée du matériau flexible (1 a, 1 b, 1 c) pour tous les poteaux (1) ou au moins pour une partie des poteaux (1) est disposée de telle manière que
- cette portion s'étend en forme d'un arc de cercle dans la direction d'un poteau (1) voisin, et
- cette portion est soumise à une tension en raison des propriétés du matériau flexible, où
- la portion de poteau supérieure (1 a), laquelle suit la portion du poteau (1) s'étendant en forme d'arc de cercle, est reliée de manière amovible avec le poteau (1) voisin.

2. Dispositif de limitation transportable selon la revendication 1, **caractérisé en ce que** les poteaux (1) sont respectivement constitués d'un matériau flexible sur toute leur longueur.

3. Dispositif de limitation transportable selon la revendication 1, **caractérisé en ce que** les poteaux (1) sont subdivisés en une portion supérieure (1a) et en une portion de poteau moyenne (1 b), ce dernier se situant entre la portion de poteau supérieure (1a) et la portion de poteau inférieure (1 c), où la portion de poteau moyenne (1 b) est constituée d'un matériau flexible.

4. Dispositif de limitation transportable selon la revendication 3, **caractérisé en ce que** la liaison amovible (2) entre la portion de poteau supérieure (1 a) d'un premier poteau (1) avec un deuxième poteau (1) voisin est respectivement disposée dans la portion de poteau moyenne (1 b) du poteau voisin (1) située entre la portion de poteau supérieure (1a) et la portion de poteau inférieure (1c).

5. Dispositif de limitation selon l'une quelconque des revendications 1 à 4, **caractérisé en ce que** le matériau flexible est constitué d'une matière plastique élastique ou d'un métal élastique.

6. Dispositif de limitation selon la revendication 5, **caractérisé en ce que** le matériau flexible est en fibres de verre ou un matériau renforcé de fibres de carbone.

7. Dispositif de limitation selon la revendication 5, **caractérisé en ce que** le matériau flexible est constitué de deux ou de plusieurs tiges de métal avec chaque fois une section transversale circulaire, où les tiges de métal sont tressées les unes autour des autres dans la direction longitudinale, de manière semblable aux brins individuels d'une corde, pour l'augmentation de la stabilité du poteau (1) constitué du matériau flexible, respectivement de la portion de poteau.

8. Dispositif de limitation selon l'une quelconque des revendications 1 à 7, **caractérisé en ce que**, chaque fois, sur la portion de poteau supérieure (1a), un élément de liaison (2) est disposé, qui est constitué de deux éléments de serrage (2a) espacés l'un de l'autre, où l'espace entre les éléments de serrage (2a) est identique ou légèrement inférieur en dimension à la section transversale du poteau voisin (1), dans la portion de poteau (1 a, 1 b) respective qui est prévue pour la mise en place de l'élément de liaison (2) pour la réalisation d'une liaison amovible entre deux poteaux (1) voisins.

9. Poteau (1) pour le montage d'un dispositif de limitation selon l'une quelconque des revendications 1 à 8, **caractérisé en ce que**, pour la fabrication d'une liaison amovible avec le poteau (1) voisin, soit
- l'extrémité de la portion de poteau supérieure est recourbée comme un crochet, soit
- au moins un crochet (2) est disposé dans la zone de la portion de poteau supérieure (1 a) servant d'élément de liaison, l'ouverture du crochet (2) à l'état non courbé du poteau (1) étant orientée en direction de la portion de poteau inférieure (1c), et
- chaque poteau (1) comporte un élément de fixation (3) dans la zone de la portion s'étendant en forme d'arc de cercle pour la fixation de la hauteur de l'élément de liaison (2) faisant partie du poteau voisin.

10. Poteau (1) pour le montage d'un dispositif de limitation selon l'une quelconque des revendications 1 à 8, **caractérisé en ce qu'**un élément de liaison (2) est disposé sur la portion de poteau supérieure (1 a), où
- l'élément de liaison (2) est constitué de deux éléments de serrage (2a) espacés l'un de l'autre, et
- les éléments de serrage (2a) sont reliés ensemble de telle manière que l'espace entre les éléments de serrage (2a) correspond à environ la section transversale du poteau (1) voisin, dans la portion de poteau dans laquelle est prévu le montage de l'élément de fixation (2) pour la réalisation d'une liaison amovible avec le poteau (1) voisin respectif.

11. Poteau (1) selon l'une quelconque des revendications 9 et 10, **caractérisé en ce que** le poteau (1) présente un arc de forme circulaire à ellipsoïde, dont l'angle se situe dans la plage de 70° à 180°, dans la portion de poteau (1a, 1 b) constituée du matériau flexible, où
- la surface décrite par l'arc est recouverte au moins partiellement par une structure (10) plane dans le matériau flexible, et
- la structure plane (10) constituée d'un matériau flexible est reliée solidement ou de manière amovible avec la portion de poteau décrite par l'arc sur toute sa longueur ou au moins avec deux portions d'arc (1 a, 1 b) se faisant face.

12. Poteau (1) selon la revendication 11, **caractérisé en ce que** la structure plane (10) constituée du matériau flexible est constituée d'un tissu en polyester, d'un filet de matière plastique, d'un tissu de coton ou d'un non-tissé ou de feutre.

13. Poteau en plusieurs parties (11) comprenant deux ou plusieurs poteaux individuels (1) selon l'une quelconque des revendications 9 à 12, où les poteaux individuels (1) présentent chacun une hauteur différente, et
les poteaux individuels (1) dans le poteau en plusieurs parties (11)
- ferment ensemble en se joignant l'extrémité inférieure, et
- sont reliés ensemble solidement dans un arrangement en forme de paquets.

14. Poteau en plusieurs parties (11) selon la revendication 13, **caractérisé en ce que** la liaison entre les poteaux arrangés en forme de paquets à leurs extrémités inférieures est réalisée par une gaine (12) en matière plastique ou en métal, laquelle entoure les poteaux (1) individuels.

15. Poteau en plusieurs parties (11) selon la revendication 14, **caractérisé en ce que** la gaine (12) conçue sous la forme d'un système d'ancrage dans le sol (9a) présente une surface non plane sur le côté externe avec des éléments transversaux sortant vers l'extérieur au-dessus de la surface, où les éléments transversaux servent à l'ancrage latéral du poteau (11).

16. Poteau en plusieurs parties (11) selon l'une quelconque des revendications 13 à 15, **caractérisé en ce que**, chaque fois, deux poteaux (1) individuels faisant partie d'un poteau en plusieurs parties (11) avec une longueur différente le long de leur direction longitudinale sont reliés ensemble par une structure (10) plane constituée d'un matériau flexible qui est constituée d'un matériau tissé ou non-tissé.

17. Dispositif de limitation construit à partir de poteaux en plusieurs parties (11) selon l'une quelconque des revendications 13 à 16.

18. Dispositif de limitation selon la revendication 17, construit à partir de plusieurs poteaux en plusieurs parties (11) identiques selon l'une quelconque des revendications 13 à 16, où
- les poteaux (1) individuels sont agencés dans le dispositif de limitation construit de telle manière qu'ils s'étendent, chacun dans la zone de leur portion flexible, sous la forme d'un arc de cercle dans la direction du poteau (1) voisin, avec lequel ils sont reliés solidement ou de manière amovible, et
- les poteaux (1) individuels décrivent selon leurs longueurs différentes des arcs de cercle superposés les uns sur les autres en fonction de leurs tailles différentes.

19. Utilisation d'une pluralité de poteaux (1) selon l'une quelconque des revendications 9 à 12, ou d'une pluralité de poteaux en plusieurs parties (11) selon l'une quelconque des revendications 13 à 16, pour la construction d'un dispositif de limitation servant de grillage pour une pâture et utilisation d'un poteau (1) selon l'une quelconque des revendications 9 à 12, ou d'un poteau en plusieurs parties (11) selon l'une quelconque des revendications 13 à 16, pour la construction d'un portail de pâture.

20. Utilisation d'une pluralité de poteaux (1) selon l'une quelconque des revendications 9 à 12, ou d'une pluralité de poteaux en plusieurs parties (11) selon l'une quelconque des revendications 13 à 16, pour la construction d'un dispositif servant à de la publicité ou d'une barrière lors de manifestations.
